# EUROPEAN PATENT APPLICATION

(11) **EP 4 708 553 A1**
(43) Date of publication of application: **11.03.2026**
(21) Application number: 25782792.3
(22) Date of filing: 27.02.2025
(51) Int. Cl.: H01M 50/59, H01M 50/282, H01M 50/273, H01M 50/588, H01M 50/566, H01M 50/552, H01M 50/249

(54) **BATTERY ASSEMBLY COVER, BATTERY ASSEMBLY, AND VEHICLE INCLUDING SAME**

(30) Priority: 02.04.2024 KR 20240044747
(71) Applicant: LG Energy Solution, Ltd., Seoul 07335 (KR)
(72) Inventor: KIM, Tae Wan, Daejeon 34122 (KR); CHUN, Yong Ho, Daejeon 34122 (KR)
(74) Representative: Hoffmann Eitle
(86) International application number: PCT/KR2025/002718
(87) International publication number: WO 2025/211588

(57) **Abstract**

Presented are a battery assembly cover, a battery assembly, and a vehicle including same, the battery assembly cover comprising: a base which is coupled to an open surface of a battery assembly case to seal the battery assembly case, has a plurality of first holes formed therein, and allows battery cell leads to pass through each of the first holes to expose the battery cell leads to the outside; and an insulation part which is coupled to the base, is positioned between the edge of the first holes of the base and the battery cell leads to insulate the battery cell leads from the base, and has second holes through which the battery cell leads pass.

## Description

### TECHNICAL FIELD

The present disclosure relates to a battery assembly cover, a battery assembly and a vehicle including the same capable of simplifying a process in assembling the battery assembly and improving overall battery performance.

### BACKGROUND

Recently, technology for carbon reduction has been actively developed to solve environmental problems such as abnormal temperature. In order to reduce carbon emissions, energy should be produced in an environmentally friendly way, not to produce energy with fossil fuels, and the produced energy should be stored in the form of electrical energy, and the stored electrical energy should be used in vehicles, various industrial sites and homes.

For the use of electrical energy to reduce carbon emissions, the use of batteries that may store and discharge electrical energy is essential. Accordingly, it is essential to secure the performance of the battery in order to save the electrical energy and to use it without inconvenience.

Batteries mainly utilize the oxidation-reduction reactions of metal ions, and to enhance the capacity, charge/discharge performance, and efficiency of the battery, metal ions are used at high densities, and lots of researches are also being conducted on materials that constitute electrolytes and solid electrolytes. However, in general, as the performance of batteries improves, there is a problem of reduced stability.

In the case of batteries used in vehicles, industries, and homes, they are manufactured in physical units called battery packs. The battery pack accommodates multiple battery cells inside a battery case and seals them, thereby preventing the spread of fire to the outside in case of incidents such as thermal runaway, and it also protects the internal battery cells from degradation due to external environmental factors or physical damage.

Battery packs contain multiple battery cells embedded in an intermediate form such as modules or assemblies (CMA, Cell Module Assembly). In the case of battery modules or assemblies, a plurality of battery cells are assembled into a single module or assembly, and several modules are secured inside a pack case, thus completing the battery pack. During maintenance of the battery, maintenance is performed in units of such a module or assembly, making maintenance easy.

In the case of battery modules or assemblies, a plurality of battery cells are connected to each other and fixed inside a module case and the like, and the fixed battery cells are electrically connected to each other using a busbar. The busbar is a rod-shaped conductor that allows electrical connection between the battery cells and forms a part of the battery assembly where the battery cells are stacked.

However, when electrically connecting the battery cells using the busbar, it requires additional time and cost to separately produce the busbar, a space for the bus bar should be prepared in the battery assembly such as a battery module, and it may lead to potential durability issues in the battery assembly because it is challenging to achieve a fully integrated connection between the busbar and the battery cells or the battery assembly, and accordingly, it is necessary to find effective solutions for these concerns.

The plurality of unit battery cells that constitute the battery assembly, such as modules or assemblies, may include an anode, a cathode, and an electrolyte. Since heat is generated during charging and discharging, effective heat dissipation for the battery cells is necessary. Furthermore, in terms of battery modules, assemblies, and battery packs, designs for efficient heat dissipation are required to prevent safety incidents.

In order to improve the performance of the battery, the batteries should have high energy density. In particular, in vehicles, there is limited space due to installation of various devices, and a technology is thus needed to secure extra space to efficiently stack the battery cells and battery modules within the battery pack in the limited space.

Meanwhile, batteries may experience degradation due to manufacturing errors, excessive charging and discharging, or aging. If the degradation of the battery continues, it could eventually lead to a fire. Accordingly, it is necessary to take precautions to prevent fires in the battery beforehand. To this end, it is important to continuously sense the battery's condition and acknowledge and respond to issues in advance, and it is also important to minimize damage in the event of unforeseen problems.

The description in the above background art is only intended to enhance the understanding of the background of the present disclosure and should not be construed as acknowledging that it pertains to prior art already known to a person of ordinary skill in the art.

### SUMMARY

### [TECHNICAL OBJECTIVES]

The present disclosure is intended to solve the problems described above and is directed to a battery assembly cover, a battery assembly and a vehicle including the same in which leads of battery cells are exposed to the outside to be welded together without a separate structural component such as a busbar to connect the battery cells in a battery assembly manufacturing process, and accordingly, the assembly process may be simplified to reduce costs, and the extra space may be secured to improve battery performance.

The technical challenges to be achieved in the present disclosure are not limited to the technical objectives mentioned above, and other technical objectives that are not mentioned may be clearly understood to those skilled in the art from the following description.

### [TECHNICAL MEANS]

To achieve the above technical objectives, a battery assembly cover according to the present disclosure includes: a base coupled to an open surface of a battery assembly case to seal the battery assembly case and having a plurality of first holes, wherein leads of battery cells pass through the first holes, respectively, such that the leads of the battery cells are exposed to the outside; and an insulating portion coupled to the base, disposed between an edge of the first hole of the base and the leads of the battery cells to insulate the leads of the battery cells from the base, and having second holes through which the leads of the battery cells pass.

In the battery assembly cover according to the present disclosure, the battery assembly case may include the plurality of battery cells stacked inside, and the lead of each of the stacked battery cells may be exposed through the open surface of the battery assembly case.

In the battery assembly cover according to the present disclosure, the plurality of leads of the battery cells may pass through the first holes and the second holes to be exposed to the outside, and the exposed leads of the battery cells may be electrically connected to each other outside the battery assembly case.

In the battery assembly cover according to the present disclosure, among the plurality of leads of the battery cells passing through the first holes and the second holes to be exposed to the outside, adjacent leads may be welded and coupled to each other outside the battery assembly cover.

In the battery assembly cover according to the present disclosure, the plurality of first holes may be formed spaced apart from each other in the base at positions corresponding to the leads of the battery cells.

In the battery assembly cover according to the present disclosure, the plurality of second holes of the insulating portion may be formed spaced apart from each other at positions overlapping the plurality of first holes of the base.

In the battery assembly cover according to the present disclosure, the first holes and the second holes may be respectively formed in the base and the insulating portion at positions corresponding to the leads of the battery cells such that the lead of the battery cell may pass through the first hole and the second hole in a straight path.

In the battery assembly cover according to the present disclosure, the base may be in a panel shape having an edge coupled to the battery assembly case to close the open surface of the battery assembly case.

In the battery assembly cover according to the present disclosure, the base may be formed of a metal material.

In the battery assembly cover according to the present disclosure, the insulating portion may be formed of a non-conductive material and is in contact with one surface of the base.

In the battery assembly cover according to the present disclosure, the insulating portion may be formed of a non-conductive material and includes a pair of insulating portions, and the base may be disposed between the pair of insulating portions and both surfaces of the base are in contact with the pair of insulating portions, respectively.

In the battery assembly cover according to the present disclosure, the lead of the battery cell may pass through the first hole of the base and the second holes of the pair of insulating portions and be bent after passing through the second hole of an outermost insulating portion.

In the battery assembly cover according to the present disclosure, an insulating portion out of the pair of insulating portions that is disposed on an inner side facing the battery cell may be smaller in size than the base.

In the battery assembly cover according to the present disclosure, the base may be covered by the insulating portion on an inner side and is coupled to the battery assembly case through an exposed edge.

In the battery assembly cover according to the present disclosure, an insulating portion out of the pair of insulating portions that is disposed on an outer side facing outside may have a size the same as or larger than the base.

In the battery assembly cover according to the present disclosure, a portion of one or more insulating portions out of the pair of insulating portions where the second hole is formed may be recessed inwardly of the first hole, and the pair of insulating portions may be in surface contact with each other at the portion where the second hole is formed.

In the battery assembly cover according to the present disclosure, the first hole of the base may be larger in size than the second hole of the insulating portion.

In the battery assembly cover according to the present disclosure, the second hole of the insulating portion may be aligned with the first hole of the base at a position corresponding to each other in a straight path with respect to a center of each hole.

In the battery assembly cover according to the present disclosure, the first hole and the second hole may be disposed such that their respective center points coincide with each other, and the second hole may be disposed inwardly apart from an edge of the first hole.

A battery assembly according to the present disclosure includes the battery assembly cover.

A vehicle according to the present disclosure includes the battery assembly cover.

### [ADVANTAGEOUS EFFECT]

In a battery assembly cover, a battery assembly and a vehicle including the same according to the present disclosure, leads of battery cells may be exposed to the outside and welded together in a battery assembly manufacturing process to simplify the assembly process and reduce costs, and a separate structural component to connect the battery cells may be removed to secure extra space to stack an additional battery cell or battery assembly, thereby improving performance of the battery assembly or the overall system that utilizes it.

The effects obtained from the present disclosure are not limited to the effects mentioned above, and other effects that are not mentioned may be clearly understood to those skilled in the art from the following description.

### BRIEF DESCRIPTION OF THE DRAWINGS

FIG. 1 and FIG. 2 are views illustrating a battery assembly cover according to an aspect of the present disclosure.
FIG. 3 is a view illustrating the battery assembly cover illustrated in FIG. 1 and FIG. 2 is coupled with a battery assembly.
FIG. 4 is a view illustrating that a battery cell lead of the battery assembly cover illustrated in FIG. 1 and FIG. 2 passes through first and second holes.
FIG. 5 is a view illustrating a battery assembly cover according to another aspect of the present disclosure.
FIG. 6 is a view illustrating a battery pack and a vehicle applied with a battery assembly cover of the present disclosure.

### DETAILED DESCRIPTION

In describing aspects disclosed in this specification, if a detailed description of the related prior art is deemed to obscure the essence of the aspects disclosed herein, such detailed description may be omitted. Furthermore, the accompanying drawings are provided solely to assist in understanding the aspects disclosed herein, the technical ideas disclosed in this specification are not limited by the accompanying drawings, and all modifications, equivalents, or alternatives that fall within the spirit and technical scope of the present disclosure should be understood to be included herein.

Terms such as 'first,' 'second,' and the like, which include ordinal numbers, may be used to describe various components, but the components described by these terms are not limited by them. These terms are used merely for distinguishing one component from another.

Unless explicitly stated otherwise in context, the singular terms shall be understood to include the plural.

In this specification, terms such as 'comprise,' 'include,' or 'have' are used to specify the existence of features, numbers, steps, actions, components, parts, or combinations thereof, and should not be construed as excluding the possibility of additional features, numbers, steps, actions, components, parts, or combinations thereof.

The suffixes 'module' and 'unit' used to describe components hereinafter are used for convenience in drafting the specification and do not imply any distinct meaning or role that is distinguished by itself.

When a component is described as being 'connected to' or 'coupled with' another component, it may be directly connected or coupled, or there may be intermediate components. However, when a component is described as being 'directly connected to' or 'directly coupled with' another component, it should be understood that no intermediate components are present.

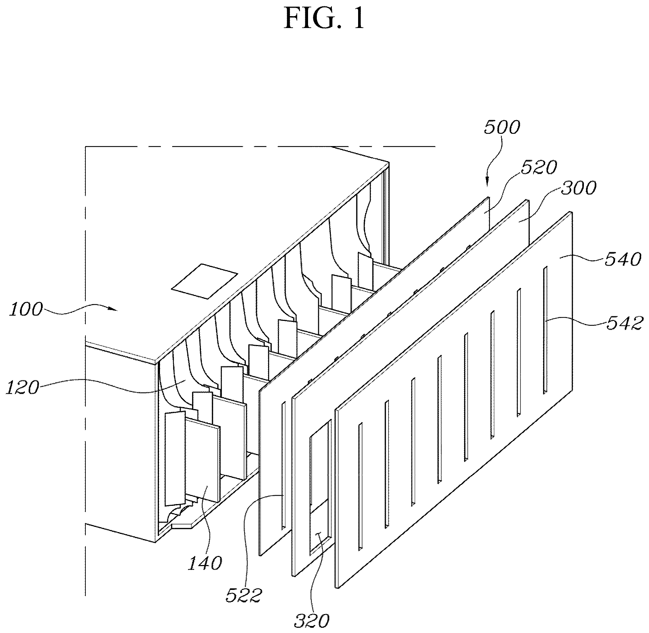

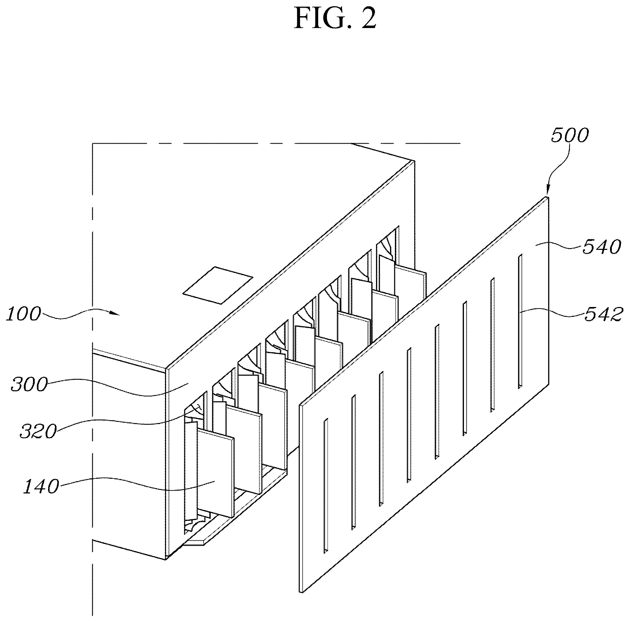

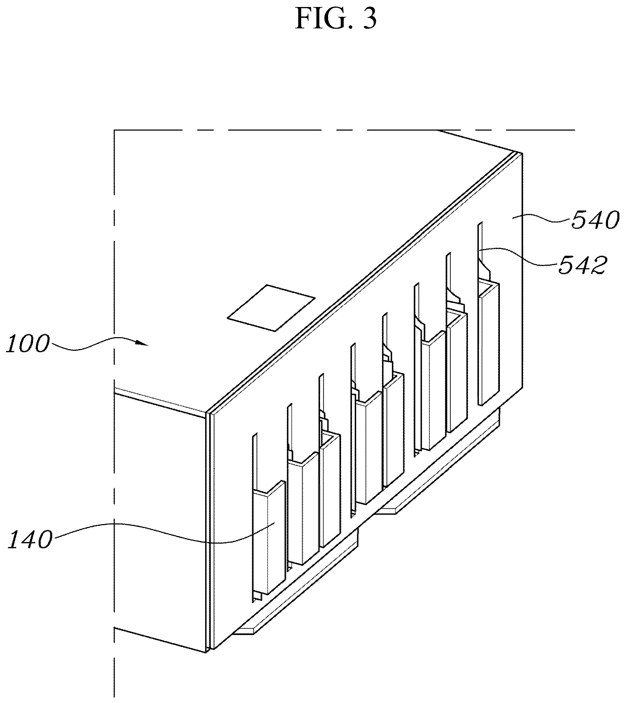

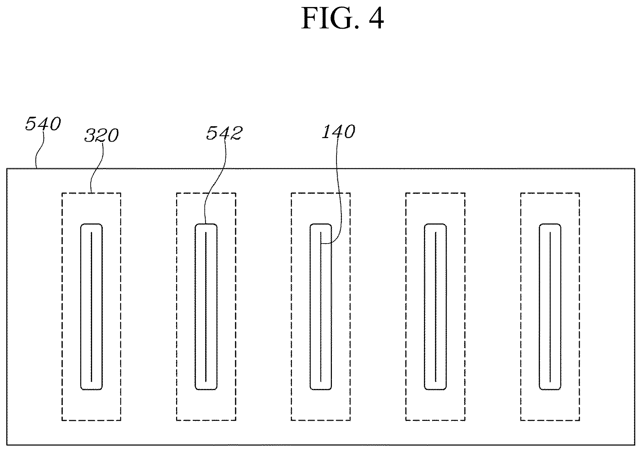

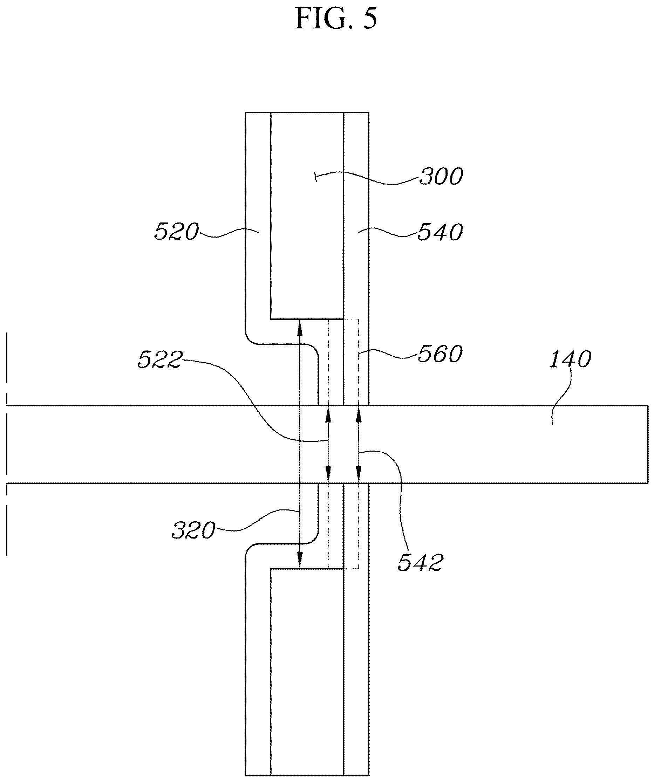

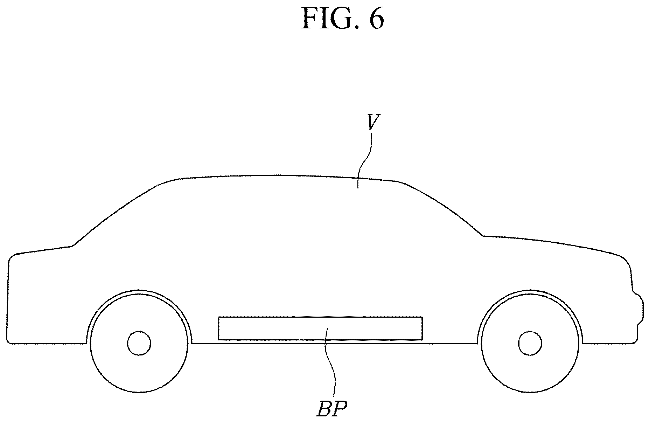

FIGS. 1 and 2 are views illustrating a battery assembly cover according to an aspect of the present disclosure, FIG. 3 is a view illustrating the battery assembly cover illustrated in FIGS. 1 to 2 is coupled with a battery assembly, FIG. 4 is a view illustrating that a battery cell lead of the battery assembly cover illustrated in FIG. 1 to 2 passes through first and second holes, FIG. 5 is a view illustrating a battery assembly cover according to another aspect of the present disclosure, and FIG. 6 is a view illustrating a battery pack and a vehicle applied with a battery assembly cover of the present disclosure.

Hereinafter, with reference to the accompanying drawings, aspects disclosed in this disclosure will be described in detail, but regardless of the drawing numeral, identical or similar components will be assigned with the same reference numeral, and redundant descriptions thereof will be omitted.

In vehicle batteries, as an energy density of the battery increases, it is more advantageous in terms of driving distance, safety, and charging time of the vehicle, and thus it is important to increase the energy density of the battery recently. In the case of vehicle batteries, since the batteries are placed in a limited space, methods to increase the energy density of the batteries are discussed.

As a method for achieving a high energy density of the battery, battery cells 120 inside the battery may be stacked with a high density. The battery cell 120 is a basic unit that constitutes the battery, and several battery cells 120 may be gathered together to form a battery module or assembly, which is a single battery assembly, and several battery assemblies, such as battery modules or assemblies, may be gathered together to form a single battery pack BP to be placed in a vehicle V. By efficiently stacking the battery cells 120 into a battery assembly such as a battery module or assembly with high density, the energy efficiency of the battery may be increased in the battery pack BP, and because the density of the battery cells 120 or the battery assembly is adjusted in the battery rather than adding a separate additional component, battery performance may be improved within a limited space without interference with other components in the vehicle V.

The battery module or assembly may be a battery assembly structured in the form of a case, a frame or a strap, and refer to a stack of a certain number of battery cells 120 on a case, a frame or the like to protect the battery cells 120 from external impact, heat, vibration, and the like. Conventionally, the battery module or assembly was formed by fixing multiple battery cells 120 onto a case, a frame or the like, and then electrically connecting the battery cells 120 using a busbar to form a circuit. Conventional bus bars were metal rods used to deliver current and electrically connect the battery cells 120 to each other.

However, when the battery assembly is formed using such a bus bar, a complex structure such as a plastic structure for fixing the bus bar is required, and there is a problem in that the manufacturing cost for producing such a structure increases. In addition, it is difficult to maximize an energy density of the battery because a volume of the battery assembly in a longitudinal direction inevitably increases to install the bus bar making it difficult to secure extra space, and there is also a problem that the stability of coupling is lowered because welding is not possible between the plastic structure for fixing a battery cell lead 140 and the bus bar.

In the present disclosure, as illustrated in FIG. 1, the plurality of battery cell leads 140 in a battery assembly case 100 are exposed to the outside, and adjacent battery cell leads 140 are welded to each other to electrically connect the battery cells 120. Accordingly, the cost may be reduced because the conventional complex plastic structure for fixing the bus bar is not required, and since the bus bar is not required by directly welding the adjacent battery cell leads 140, a volume of the battery assembly may not increase in the longitudinal direction, and accordingly, extra space may be secured inside the battery pack BP, and by adding a battery assembly such as the battery cell 120 or the battery module through the extra space, the energy density of the battery may be increased, which may help improve the overall performance of the battery.

However, since the bus bar is removed and the leads of the battery cells are directly connected to each other, more rigidity of the connection between the leads is required. Accordingly, according to the present disclosure, a base 300 that is connected to the battery assembly case 100 formed of a metal material may be formed of a metal material, and thus it is possible to weld the battery assembly case 100 and the base 300, and accordingly, connection rigidity of the battery cell leads and assembly stability of the battery assembly may be improved.

Meanwhile, the battery assembly of the present disclosure refers to a state in which the plurality of battery cells 120 are stacked inside, and when the plurality of battery cells 120 are stacked in the form of a case, it may be called a battery module, and when the plurality of battery cells 120 are stacked in the form of a frame, a strap, and the like rather than a case, it may be called an assembly. That is, the battery assembly of the present disclosure refers to a structure in the form of a case, a frame, a strap, and the like in which the plurality of battery cells 120 are stacked inside, and thus refers to a battery module or assembly. However, the battery assembly of the present disclosure should not be interpreted only in terms of a battery module or assembly, but should preferably be interpreted as a concept that includes all forms in which the plurality of battery cells 120 are stacked inside, including the battery module or assembly.

Specifically, the present disclosure proposes a battery assembly cover in which, as illustrated in FIGS. 1 and 2, part of surfaces of the battery assembly case 100 in which the battery cells 120 are stacked may be opened, the battery cell lead 140 may be exposed through the open surface, and then by using the base 300 and an insulating portion 500 having holes with a size through which the battery cell lead 140 may pass, the battery cells 120 may be exposed to the outside by passing through each hole, and adjacent battery cells 120 may be directly welded together such that the battery cell leads 140 may be directly and electrically connected to each other on the outside without a bus bar.

As illustrated in FIG. 1, in the battery assembly cover of the present disclosure, the battery assembly case 100 may have an open surface in which the battery cell lead 140 is exposed, the base 300 that is coupled to the open surface of the battery assembly case 100 and seals the battery assembly case 100 may include a plurality of first holes 320, and the battery cell lead 140 may pass through the first hole 320 of the base 300 to be exposed to the outside. In addition, there is the insulating portion 500 that is coupled to the base 300 and serves insulation between the base 300 and the battery cell lead 140, and the insulating portion 500 may include a second hole 522 through which the battery cell lead 140 passes to the outside.

Meanwhile, the battery cell 120 may be classified into a unidirectional cell and a bidirectional cell according to whether the type of electrodes located at outermost sides are the same as each other. A unidirectional cell is a battery cell 120 in which an anode and a cathode are alternately disposed in one direction, and a bidirectional cell refers to a battery cell 120 in which the same electrodes are disposed at the outermost electrode position. In the accompanying drawings of the present disclosure, it is illustrated that the battery assembly cover includes the battery cells 120 having a stack of unidirectional cells, but in the present disclosure, in the case of the bidirectional cell, the battery cell leads 140 may be exposed at an outermost portion and adjacent battery cells 120 may be welded to form electrical connection between the battery cells 120 without a busbar.

Meanwhile, in the present disclosure, electrical connection refers to connecting the battery cells 120 to each other in a series or parallel manner. When connecting the battery cells 120 in series, the voltage may be increased, and a battery with a desired capacity and voltage may be obtained by connecting battery cells 120 in series or parallel as needed.

As illustrated in FIGS. 2 and 3, the plurality of battery cell leads 140 may be exposed to the outside by passing through both the first hole 320 of the base 300 and the second hole 522 of the insulating portion 500 and the exposed battery cell leads 140 may be electrically connected to each other outside the battery assembly case 100. In the case of electrical connection, in a state where the battery cell leads 140 are connected in series or in parallel, adjacent battery cells 120 out of the battery cells 120 exposed to the outside may be welded to each other. Since electrical connection between the battery cells 120 may be formed without additional structures such as bus bars, a manufacturing process of the battery assembly itself may be simplified to reduce the manufacturing cost, and since there is no additional structure, it is possible to secure extra space, and accordingly, the battery assemblies such as the battery cells 120 or the battery modules may be stacked to have a higher energy density, thereby improving battery performance.

In the case of a battery mounted on the vehicle V, performance regarding collision should be secured and secondary damage should be suppressed in the event of a fire, and thus the battery assembly case 100 may include a metal material. In addition, it may be manufactured using aluminum, which is easy to form, lightweight, and durable among metals.

In the case of the base 300, as illustrated in FIGS. 2 and 3, since the open surface of the battery assembly case 100 should be closed, it may be formed in a shape of a panel corresponding to the open surface, and since it should be coupled to the battery assembly case 100 while closing the open surface of the battery assembly case 100, it may be formed of a metal material. Since each of the battery assembly case 100 and the base 300 includes metal, it is preferable to couple them by welding to secure durability, and the base 300 may be formed of the same metal material as the battery assembly case 100 to achieve excellent coupling strength with the battery assembly case 100.

It is obvious that the battery assembly case 100 and the base 300 may be coupled in various ways, such as bonding or mechanical fastening, in addition to welding.

The first hole 320 through which the battery cell lead 140 may pass may be formed in the base 300 at a position corresponding to the battery cell lead 140. The first hole 320 may be formed in a shape that penetrates both sides of the base 300 and may be formed in plural spaced apart from each other at positions corresponding to the battery cell leads 140 when the battery assembly case 100 and the base 300 are coupled to each other by welding or other methods. The first holes 320 may be formed by punching the base 300 formed of a metal material at a certain interval at positions corresponding to the battery cell leads 140 during the manufacturing process.

The base 300 may be coupled to the insulating portion 500 to form a cover of the battery assembly, and the formed battery assembly cover may serve to close the open surface of the battery assembly case 100, thereby serving as a housing for the battery assembly case 100. Since the battery assembly has a structure in which the battery cells 120 are stacked inside the battery assembly case 100, the battery assembly cover that serves as the housing should have durability against collisions or fire.

Since the base 300 is formed of a metal material, an electrical short may occur when it comes into contact with current flowing through the battery cell lead 140, which may cause secondary damage due to overcurrent, so it is preferable that a size of the first hole 320 is large enough not to contact the battery cell lead 140. That is, the battery assembly cover, which serves as the housing of the battery assembly case 100, should be formed of a material having sufficient rigidity to protect the battery cells 120 from external impact, and the first hole 320 of the base 300 should be formed to a size large enough for the battery cell lead 140 to pass through but not contact the battery cell lead 140 in order to prevent a short circuit between the base 300 and the battery cell lead 140 formed of metal.

Meanwhile, the insulating portion 500 may be formed of a non-conductive material and may contact one surface of the base 300 to provide insulation between the battery cell lead 140 and the base 300. The insulating portion 500 may serve to insulate not only between the base 300 and the battery cell lead 140, but also between the base 300 and the battery cell 120 or between the base 300 and metal parts outside the battery assembly, so it may be formed of a material such as mica because it should be formed of a material with strong electrical insulation, and should be formed of a heat-resistant material that may withstand high temperature situations such as fire in the event of an abnormal situation of the battery.

As illustrated in FIGS. 1 and 2, the second hole 522 may be formed in the insulating portion 500 and the plurality of second holes 522 may be formed spaced apart from each other so as to be arranged at positions overlapping the plurality of first holes 320 of the base 300. As such, when the first hole 320 and the second hole 522 is arranged in overlapping positions, due to the first hole 320 formed at the position corresponding to the battery cell lead 140, the second hole 522 may also be formed at the position corresponding to the battery cell lead 140, and accordingly, the battery cell lead 140 may pass through the first hole 320 and the second hole 522 in a straight path.

As illustrated in FIGS. 1 and 2, the battery assembly cover of the present disclosure refers to a cover in which the base 300 and the insulating portion 500 are coupled to each other by closing the open surface of the battery assembly case 100. In the case of the base 300 including a metal material and the insulating portion 500 including a material such as mica, they may be coupled to each other with an adhesive, or structurally coupled using a hook and the like. By managing the process so that the base 300 and the insulation 500 are assembled while being coupled to each other during the manufacturing process, the manufacturing cost may be reduced, and the overlap portion of the first hole 320 and the second hole 522 may be easily aligned, and thus the manufacturing tolerance may be reduced such that the battery cell lead 140 may be exposed to the outside without interference when being coupled to the battery assembly case 100.

Accordingly, before coupling the battery assembly cover to the open surface of the battery assembly case 100, it is preferable that the base 300 and the insulation 500 that constitute the battery assembly cover are firstly coupled to each other to complete the battery assembly cover, and then the open surface of the battery assembly case 100 may be closed to for coupling.

Since the base 300 is formed of a metal material, if it comes into direct contact with the battery cell lead 140 through which current flows, an electrical short may occur, which may cause secondary damage due to overcurrent. Accordingly, when the battery cell lead 140 passes through the first hole 320 of the base 300, the battery cell lead 140 may not contact an edge portion of the first hole 320 that constitutes part of the base 300. Referring to FIG. 4, the present disclosure proposes a battery assembly cover formed such that the first hole 320 of the base 300, which is a dotted line portion, is formed larger in size than the second hole 542 of the insulating portion 540, which is a solid line portion, such that the battery cell lead 140 may pass through both of the first hole 320 and the second hole 542, while being positioned in an area of the second hole 542, thereby preventing contact with the edge portion of the first hole 320.

Specifically, the second hole 542 of the insulating portion 500, which is the solid line portion in FIG. 4, may be aligned with the first hole 320 of the base 300, which is the dotted line portion, at a position corresponding to each other in a straight path with respect to a center of each hole, such that center points may coincide with each other. In a state where the center points are aligned, the second hole 542 may be positioned inwardly apart from the edge of the first hole 320, and the battery cell lead 140 may pass through both of the first hole 320 and the second hole 542, but may not escape from the area of the second hole 542, and accordingly, contact with the first hole 320 may be prevented.

As such, electrical shorts between the battery cell lead 140 and the first hole 320 of the base 300 formed of metal may be prevented, thereby preventing secondary damage due to overcurrent in advance, and it may help improve the overall battery safety.

The insulating portion 500 may be formed of a non-conductive material such as mica, and serve to electrically insulate not only between the battery cell lead 140 and the base 300, but also between metal parts outside the battery cell 120 and the base 300. Accordingly, as illustrated in FIGS. 1 and 2, the insulating portion 500 may also be disposed on the outside of the base 300 because it should serve to electrically insulate not only between the battery cell lead 140 and the base 300, but also between metal parts outside the battery assembly and the base 300.

Accordingly, the insulating portion 500 may be configured as a pair that covers both surfaces of the base 300 with respect to the base 300 to contact the both surfaces of the base 300, and may include, with respect to the base 300, an insulating portion 520 that is disposed on the inside facing the battery cell 120 and an insulating portion 540 that is disposed on the outside facing the outside.

As illustrated in FIG. 1, the battery assembly cover of the present disclosure may be configured with a single base 300 and the inner insulating portion 520 and the outer insulating portion 540 that cover both sides of the base to be in surface contact with both sides of the base. In order to reduce manufacturing tolerance and increase assembly stability, it is preferable to firstly manufacture the battery assembly cover such that the base 300 and the pair of insulating portions 520, 540 are coupled to each other, and then couple the completed battery assembly cover to the battery assembly case 100 as illustrated in FIG. 3.

Although the outer insulating portion 540 is separately illustrated in FIG. 2 to explain the coupling relationship of the battery assembly cover, in the case of the battery assembly cover of the present disclosure, it is not necessary that the base 300 and the pair of insulating portions 520, 540 are coupled to each other first and then coupled to the battery assembly case 100, but the inner insulating portion 520, the base 300, and the outer insulating portion 540 may be sequentially coupled to the open surface of the battery assembly case 100.

The base 300 may include a metal material and, and as illustrated in FIG. 3, may close the open surface of the battery assembly case 100 while being coupled to an edge of the open surface of the battery assembly case 100 by welding or the like. Accordingly, among the pair of insulating portions 500, the insulating portion 520 positioned on the inner side facing the battery cell 120 may be formed to be smaller than the base 300, as illustrated in FIG. 1, such that an edge portion of the base 300 may be coupled to an edge of the open surface of the battery assembly case 100, and the insulating portion 540 positioned on the outer side facing the outside with respect to the base 300 may sufficiently close the open surface of the battery assembly case 100 to serve as a housing of the battery assembly case 100 and may be manufactured to have the same size as the base 300 or a larger size than the base 300 in order to ensure insulation between the base and external metal parts.

As illustrated in FIG. 1, the inner insulating portion 520 and the outer insulating portion 540 may be respectively disposed to contact both sides of the base 300, and the inner insulating portion 520 and the outer insulating portion 540 may each be formed with the second holes 522, 542, and each of the second holes 522, 542 may be formed at a position corresponding to the first hole 320 of the base 300 and the battery cell lead 140. By contacting the inner insulating portion 520 and the outer insulating portion 540 on both sides of the base 300 with respect to the base 300, the battery cell lead 140 may pass through both the second hole 522 of the inner insulating portion 520 and the second hole 542 of the outer insulating portion 540 to be in each of the second holes 522, 542, and thus the battery cell lead 140 may be more reliably prevented from contacting the first hole 320 which is larger in size than the second holes 522, 542 and formed of a metal material, thereby reducing the possibility of secondary damage due to an electrical short.

FIG. 5 illustrates another aspect of a battery assembly cover, which includes a pair of insulating portions 500 that may contact both sides of a base 300, and at least one of the pair of insulating portions 500 may be formed such that a portion where second holes 522, 542 is formed is recessed inwardly of a first hole 320, such that the pair of insulating portions 500 may come into surface contact with each other at the portion where the second hole 522 is formed.

As illustrated, since the first hole 320 is larger in size than the second holes 522, 542, the battery cell lead 140 may pass through the first hole 320 and the second holes 522, 542 without contacting the first hole 320. However, if an impact such as vibration or external shock is exerted to the base 300 and the insulating portion 500 due to the external environment of the battery assembly, the battery cell lead 140 may come into instantaneous contact with the first hole 320, which may cause an electrical short circuit.

To prevent this, the inner insulating portion 520 may be bent and then recessed inwardly of the first hole 320 to be in surface contact with the outer insulating portion 540, such that contact between the base 300 and the battery cell lead 140 may be prevented in advance, and the battery assembly may be more firmly secured as the inner insulating portion 520 and the outer insulating portion 540 may come into direct contact with each other.

In FIG. 5, as an area of a surface contact portion 560 increases, a coupling force between the inner insulating portion 520 and the outer insulating portion 540 increases to manufacture a battery assembly cover with improved durability, and accordingly, the battery assembly cover may be manufactured such that the inner insulating portion 520 may be bent and then recessed inwardly of the first hole 320 to be coupled with the outer insulating portion 430 at a position where the battery cell lead 140 may smoothly pass through the first hole 320 and the second holes 522, 542 while maximizing the surface contact portion 560.

Meanwhile, as illustrated in FIG. 6, the battery assembly cover according to the present disclosure may be applied to battery packs BP of various vehicles V such as internal combustion engine vehicles, electric vehicles, hybrid vehicles, and fuel cell vehicles, and in addition to vehicles V, it may be applied to battery packs BP in various fields such as industrial Energy Storage System (ESS) or household ESS, small battery packs, and the like.

Although the present disclosure has been illustrated and described with respect to specific aspects, it will be apparent to those skilled in the art that the present disclosure may be variously improved and modified without departing from the technical idea of the present disclosure provided by the following claims.

## Claims

1. A battery assembly cover comprising:
a base having a plurality of first holes and coupled to an open surface of a battery assembly case to seal a battery assembly, wherein leads of battery cells pass through the first holes, respectively, such that a plurality of leads of the battery cells are exposed outside of the base; and
an insulating portion coupled to the base, the insulating portion having
portions disposed between edges of the first holes of the base and the leads of the battery cells to insulate the leads of the battery cells from the base, and
a plurality of second holes through which the leads of the battery cells pass.

2. The battery assembly cover of claim 1, wherein the battery assembly case includes a plurality of battery cells stacked inside, and
leads of the plurality of battery cells stacked inside are exposed through the open surface of the battery assembly case.

3. The battery assembly cover of claim 1, wherein the plurality of leads of the battery cells pass through the first holes and the second holes to be exposed outside of the battery assembly case, and
the exposed leads of the battery cells are electrically connected together outside the battery assembly case.

4. The battery assembly cover of claim 1, wherein among the plurality of leads of the battery cells passing through the first holes and the second holes to be exposed to the outside, adjacent leads are welded and coupled to each other outside the battery assembly cover.

5. The battery assembly cover of claim 1, wherein the plurality of first holes are formed spaced apart from each other in the base at positions corresponding to the leads of the battery cells.

6. The battery assembly cover of claim 1, wherein the plurality of second holes of the insulating portion are formed spaced apart from each other at positions overlapping the plurality of first holes of the base.

7. The battery assembly cover of claim 1, wherein the first holes and the second holes are respectively formed in the base and the insulating portion at positions corresponding to the leads of the battery cells such that a lead of the plurality of leads of the battery cell passes through a respective first hole and a respective second hole in a straight path.

8. The battery assembly cover of claim 1, wherein the base has a panel shape with an edge coupled to the battery assembly case to close the open surface of the battery assembly case.

9. The battery assembly cover of claim 1, wherein the base includes a metal material.

10. The battery assembly cover of claim 1, wherein the insulating portion includes a non-conductive material in contact with one surface of the base.

11. The battery assembly cover of claim 1, wherein the insulating portion is one of a pair of insulating portions including non-conductive material, and
the base is disposed between the pair of insulating portions and both surfaces of the base are in contact with one of the pair of insulating portions, respectively.

12. The battery assembly cover of claim 11, wherein the lead of the battery cell passes through the first hole of the base and the second holes of the pair of insulating portions and is bent outside of the second hole of an outermost insulating portion.

13. The battery assembly cover of claim 11, wherein the base is covered by the insulating portion on an inner side and is coupled to the battery assembly case through an exposed edge.

14. The battery assembly cover of claim 11, wherein a portion of one or more insulating portions out of the pair of insulating portions, where the second hole is formed, is recessed inwardly of the first hole, and
the pair of insulating portions are in surface contact with each other where the second hole is formed.

15. The battery assembly cover of claim 1, wherein the first hole and the second hole are disposed such that their respective center points coincide with each other, and
the second hole is disposed inwardly and apart from an edge of the first hole.
